# FASCICULE DE BREVET EUROPEEN

(11) **EP 2 678 225 B1**
(45) Date de publication et mention de la délivrance du brevet: **03.04.2019**
(21) Numéro de dépôt: 12711931.1
(22) Date de dépôt: 23.02.2012
(51) Int. Cl.: B64C 3/54, B64C 7/02, B64C 9/02, B64C 9/16, B64C 25/14, B64D 27/00

(54) **AÉRONEF À IMPACT ENVIRONNEMENTAL RÉDUIT**
FLUGZEUG MIT VERRINGERTEN UMWELTAUSWIRKUNGEN
AIRCRAFT WITH REDUCED ENVIRONMENTAL IMPACT

(30) Priorité: 25.02.2011 FR 1151584
(43) Date de publication de la demande: 01.01.2014
(73) Titulaire: Airbus Operations, 31060 Toulouse (FR)
(72) Inventeur: GALL, Pierre-Emmanuel, F-31200 Toulouse (FR); GALLANT, Guillaume, F-31480 Lareole (FR)
(74) Mandataire: Santarelli
(86) Numéro de dépôt international: PCT/FR2012/050384
(87) Numéro de publication internationale: WO 2012/114047

(56) Documents cités:
- FR-A- 812 036
- FR-A1- 2 856 655
- FR-A1- 2 915 179
- FR-A1- 2 942 202
- GB-A- 489 853
- GB-A- 1 463 810
- US-A- 4 460 138
- US-A- 5 651 513
- US-A1- 2008 142 641
- US-A1- 2008 191 087
- US-A1- 2009 057 493

## Description

L'invention est relative à un aéronef à impact environnemental réduit.

Dans le domaine des aéronefs court à moyen courrier, et de l'aéronautique en général, l'optimisation de l'utilisation du carburant est un facteur essentiel à la rentabilité.

De façon classique, de tels aéronefs sont équipés de turboréacteurs qui sont un compromis entre le coût en énergie et l'impact sur l'environnement. En effet, d'autres systèmes propulsifs, tels que les moteurs propulsifs à hélices contrarotatives, permettent une économie de 20% en carburant, mais sont souvent écartés du fait des nuisances sonores qu'ils provoquent. Pour ce type de motorisation, les sources de bruit à considérer sont :
- le bruit propre de chaque hélice, dû à la fréquence de passage des pales et à ses harmoniques, qui est un bruit de type basse fréquence et par conséquent difficile à masquer ; et
- le bruit d'interaction entre les hélices.

La Demanderesse a déjà constaté que le bruit propre de chaque hélice pouvait être réduit, de sorte que le bruit prépondérant est celui résultant de l'interaction entre les hélices. Elle a également pu déterminer, par voie expérimentale et numérique, les zones de source de bruit pour un turbopropulseur à hélices contrarotatives qui peuvent être modélisées par :
- un premier lobe conique dirigé vers l'avant dudit turbopropulseur et centré sur son axe, son sommet se trouvant approximativement à mi-chemin entre les plans des hélices ;
- un second lobe conique dirigé vers l'arrière du turbopropulseur et centré sur son axe, son sommet se trouvant approximativement à mi-chemin entre les plans des hélices.

Ainsi, dans la demande de brevet FR 2 905 356, la Demanderesse révélait l'intérêt d'un masquage du lobe de bruit amont par la voilure et présentait plusieurs solutions, notamment :
- le recul simple de la voilure ;
- l'adjonction d'une surface portante supplémentaire dite canard pour compenser la réduction de qualité de vol due au recul de la voilure ;
- l'utilisation d'une voilure à flèche inverse afin de réduire le recul du foyer par rapport à une voilure à flèche classique.

Un autre exemple de l'art antérieur est fourni par le document GB1463810.

La présente invention propose une nouvelle configuration d'aéronef permettant de réduire le bruit généré par la motorisation à travers l'utilisation d'au moins un dispositif de masquage acoustique.

L'invention a plus particulièrement comme objet un aéronef à impact environnemental réduit, comportant au moins un fuselage pourvu d'une voilure comprenant deux ailes symétriques et au moins un moteur, ledit au moins un moteur étant monté sur le dos de l'aéronef, à l'arrière de l'aéronef entre lesdites ailes et l'extrémité arrière de l'aéronef de sorte que la voilure n'est pas placée directement en dessous du moteur et ledit au moins un moteur générant du bruit vers l'avant, le bruit généré par ledit au moins un moteur se diffusant dans une zone de bruit, ledit aéronef comportant au moins un dispositif de masquage acoustique comprenant au moins un élément de masquage associé à la voilure qui est apte à se déplacer entre, d'une part, une position rétractée et, d'autre part, une position déployée dans laquelle ledit au moins un élément de masquage intercepte la zone de bruit de manière à réduire la perception au sol du bruit diffusé vers l'avant par ledit au moins un moteur, l'élément de masquage acoustique étant reculé dans sa position déployée de manière à augmenter la corde à l'emplanture de la voilure. L'au moins un élément de masquage comprend un volet principal et au moins un volet secondaire, le volet secondaire étant agencé de manière à obturer, dans sa position déployée, l'espace libre entre le volet principal mobile et la voilure fixe pour améliorer le masquage acoustique.

Avantageusement, un moteur de type turbopropulseur (hélices non carénées) sera par exemple utilisé pour permettre une forte réduction de la consommation en carburant.

La Demanderesse a constaté que le paramètre déterminant pour le masquage acoustique est la surface de la voilure et sa position par rapport au moteur, dont la corde à l'emplanture est la plus représentative. De ce fait, un masquage acoustique est d'autant plus efficace que la corde est reculée et grande. En effet, la position optimale théorique de la voilure reculée se situe légèrement en avant du moteur, mais n'est pas atteignable en raison de la position du moteur par rapport à la voilure (en hauteur). Une position haute du moteur, voire une position RFN (« Rear Fuselage Nacelle » en terminologie anglo-saxonne) dont les moteurs sont situés en arrière du fuselage, au-dessus d'un empennage servant de masque pour le bruit émis à l'aval de chacun des moteurs, sera de ce fait plus adaptée à un masquage par la voilure.

Le déplacement dudit au moins un dispositif de masquage acoustique permet de limiter les dimensions (corde) et le recul de la voilure.

L'utilisation dudit au moins un élément de masquage acoustique déployable permet en effet de réduire le bruit sans avoir nécessairement besoin d'agir sur la position de la voilure, qui n'a pas à se placer directement en-dessous du moteur On peut toutefois également reculer la position de la voilure afin d'amplifier l'effet d'atténuation acoustique comme mentionné ci-dessus.

Le fait que le moteur ne soit pas placé directement au-dessus des ailes permet, en cas de perte d'intégrité du moteur ou de son mât (éclatement d'une partie rotative, détachement du moteur... etc.) de préserver la voilure et donc de ne pas nécessiter d'y apposer des renforts qui impliquerait une augmentation de masse de l'aéronef.

Selon une caractéristique possible, l'élément de masquage est en position rétractée en phase de croisière et en position déployée en phase de décollage, d'atterrissage et/ou d'approche.

Ainsi, de façon avantageuse, la réduction de bruit a lieu lors des phases de vol où le bruit est le plus indésirable, c'est-à-dire lorsque l'aéronef est le plus proche du sol.

La voilure de l'aéronef peut comporter au moins un empennage horizontal arrière, ledit au moins un moteur étant monté à l'arrière de l'aéronef entre lesdites ailes et ledit empennage horizontal, un dispositif de masquage acoustique étant associé à chacune des ailes, ledit au moins un élément de masquage de chaque dispositif étant apte à se déplacer entre une position rétractée et une position déployée de manière à augmenter la corde à l'emplanture de chacune des ailes.

Avantageusement, ledit au moins un dispositif comprend des moyens de déplacement dudit au moins un élément de masquage pour passer d'une position à une autre.

Selon un mode de réalisation optimisant la position du dispositif de masquage et la place disponible, ledit au moins un élément de masquage dudit au moins un dispositif est composé d'au moins un volet.

Dans ce cas, l'invention peut être mise en oeuvre dans une configuration d'avion commercial classique, en remplaçant les volets internes par les volets du dispositif de masquage acoustique (par exemple au moins un volet acoustique par aile), ces derniers assurant à la fois une fonction aérodynamique basse vitesse (hypersustentation) et la fonction d'élément de masquage acoustique.

Selon un mode de réalisation particulier, le volet principal est rigide et ledit au moins un volet secondaire est fait d'une toile souple.

Un tel agencement permet d'obtenir, en position déployée, un très fort recul et donc une très grande efficacité de masquage acoustique.

L'avantage d'utiliser une toile souple est qu'elle peut être stockée enroulée, ce qui permet d'optimiser l'espace nécessaire disponible tel que l'espace disponible situé derrière le longeron arrière de la voilure.

A cet effet, ledit au moins un dispositif de masquage comprend un système enrouleur/dérouleur permettant selon les besoins d'enrouler et de dérouler la toile souple. En position déroulée la toile est tendue.

Selon une caractéristique, ledit au moins un dispositif de masquage acoustique comporte un système de chariot(s) et de rail(s) servant au guidage du déplacement du chariot lors du déplacement dudit au moins un élément de masquage.

Pour un aéronef selon l'invention comportant au moins un carénage lié à la voilure, le système de chariot(s) et de rail(s) comporte deux rails logés respectivement dans le fuselage et dans ledit au moins un carénage. Cette configuration apporte des possibilités de synergie avec la position des trains d'atterrissage auxiliaires, de préférence logés dans les carénages. La réduction de bruit offre en effet l'occasion d'une réduction de la consommation de carburant. C'est notamment le cas pour des configurations avec voilure à forte envergure (pour laquelle la stabilité au sol de l'avion nécessite une voie importante), mais également pour des configurations définies plus loin telles que :
- avec moteur(s) à l'arrière où la voilure serait reculée par rapport à un aéronef plus classique
- à voilure optimisée à fort allongement et faible flèche.

Avantageusement, une configuration avec voilure à forte envergure peut être associée à une configuration à voilure optimisée à fort allongement et faible flèche.

Selon une caractéristique, l'aéronef peut comporter deux carénages liés à la voilure, un train d'atterrissage principal central et deux trains d'atterrissage auxiliaires de type balanciers respectivement logés dans les deux carénages.

Ceci permet notamment d'optimiser le volume disponible pour loger des réservoirs à carburant et de réduire les charges induites sur la voilure. En outre, l'utilisation de trains auxiliaires permet d'obtenir une voie de train principal importante assurant une stabilité au sol suffisante tout en minimisant la taille de carénages.

Avantageusement, le ou les carénages en question sont des carénages dits « de Küchemann » situés sensiblement au milieu de chacune des ailes de la voilure.

L'intérêt des « carottes de Küchemann » est bien connu de l'homme du métier pour améliorer les performances de l'aéronef par utilisation de la Loi des Aires de Whitcomb.

Le choix de ce type de carénage s'inscrit dans la démarche de synergie décrite plus haut. En effet les carénages de Küchemann sont dans cette optique les plus adaptés au stockage de trains d'atterrissages auxiliaires, évitant ainsi l'utilisation d'un train sur voilure classique qui serait difficile à mettre en oeuvre sur une voilure d'une grande finesse et/ou d'une faible épaisseur absolue.

Selon un autre mode de réalisation, les moyens de déplacement dudit au moins un élément de masquage, qui est, par exemple, composé d'au moins un volet, comprennent un parallélogramme déformable.

L'intérêt majeur de ce moyen de déplacement est qu'il est très simple (à la fois peu complexe et léger) tout en offrant une très forte extension dudit au moins un volet rigide. La très forte extension rend la corde locale de la voilure très importante lorsqu'il est déployé, et se rapproche fortement de la source de bruit à masquer. En particulier, ce type de configuration permet de répondre facilement et efficacement à des contraintes environnementales sans avoir à changer de façon significative la conception d'un aéronef à configuration déjà optimisée en termes de consommation de carburant, de maintenance, de complexité et d'opération.

Selon une caractéristique, le parallélogramme déformable comprend au moins un arbre de torsion, au moins une bielle de guidage et au moins une barre de mise en mouvement, la mise en mouvement dudit parallélogramme étant assurée par la rotation dudit arbre de torsion.

Avantageusement, les ailes de l'aéronef présentent une faible flèche et un grand allongement de manière à améliorer les performances aérodynamiques à basse et grande vitesse, et donc réduire la consommation de carburant. Un effet induit est une réduction du volume des réservoirs de carburant.

Par exemple, le volume peut être réduit de 6%, ladite flèche étant au plus égale à 22° et ledit allongement au moins égal à 10. De préférence, la flèche est comprise entre 15° et 22°. Ainsi, l'aéronef présente d'excellentes performances au décollage et à l'atterrissage, notamment la faculté de s'élever plus vite dans les airs et d'atterrir plus lentement. Ceci contribue à réduire encore davantage le bruit engendré au décollage et à l'atterrissage.

La présente invention pouvant en outre présenter une configuration de voilure reculée, l'aéronef peut comporter à l'avant du fuselage une surface portante dite canard.

D'autres caractéristiques et avantages apparaitront au cours de la description qui va suivre, donnée à titre d'exemple non limitatif et faite en référence aux dessins annexés, sur lesquels :
- la figure 1a est une vue schématique en perspective d'un aéronef selon l'invention dont le dispositif de masquage acoustique est en position rétractée ;
- la figure 1b représente l'aéronef de la figure 1a dont le dispositif de masquage acoustique est en position déployée ;
- la figure 2 illustre schématiquement une modélisation (suffisamment loin des hélices) les zones de bruit engendrées par le moteur équipant l'aéronef des figures 1a et 1b ;
- la figure 3 est une vue partielle du dessus de l'aéronef de la figure 1b ;
- la figure 4a est une vue schématique en coupe selon la section A-A de l'aéronef de la figure 3 ;
- la figure 4b est une vue schématique analogue à celle de la figure 4a mais avec le dispositif de masquage en position rétractée ;
- la figure 5a est une vue en coupe d'un premier mode de réalisation d'un dispositif de masquage acoustique en position rétractée ;
- la figure 5b est une vue en coupe du dispositif de masquage de la figure 5a en position déployée ;
- la figure 6a est une vue en coupe d'un deuxième mode de réalisation d'un dispositif de masquage acoustique en position rétractée ;
- la figure 6b est une vue en coupe du dispositif de masquage de la figure 6a en position déployée ;
- la figure 7a est une vue en coupe d'un troisième mode de réalisation d'un dispositif de masquage acoustique en position rétractée ;
- la figure 7b est une vue en coupe du dispositif de masquage de la figure 7a en position déployée ;
- la figure 8 est une vue schématique en perspective selon la section B-B de la figure 3 ;
- la figure 9 est une vue schématique en coupe de la section C-C de la figure 8 ;
- la figure 10a est une vue schématique en perspective d'un quatrième mode de réalisation d'un dispositif de masquage acoustique en position rétractée ;
- la figure 10b est une vue schématique en perspective du dispositif de masquage de la figure 10a en position déployée ;
- la figure 11 est une vue schématique de face de l'aéronef de la figure 1a.

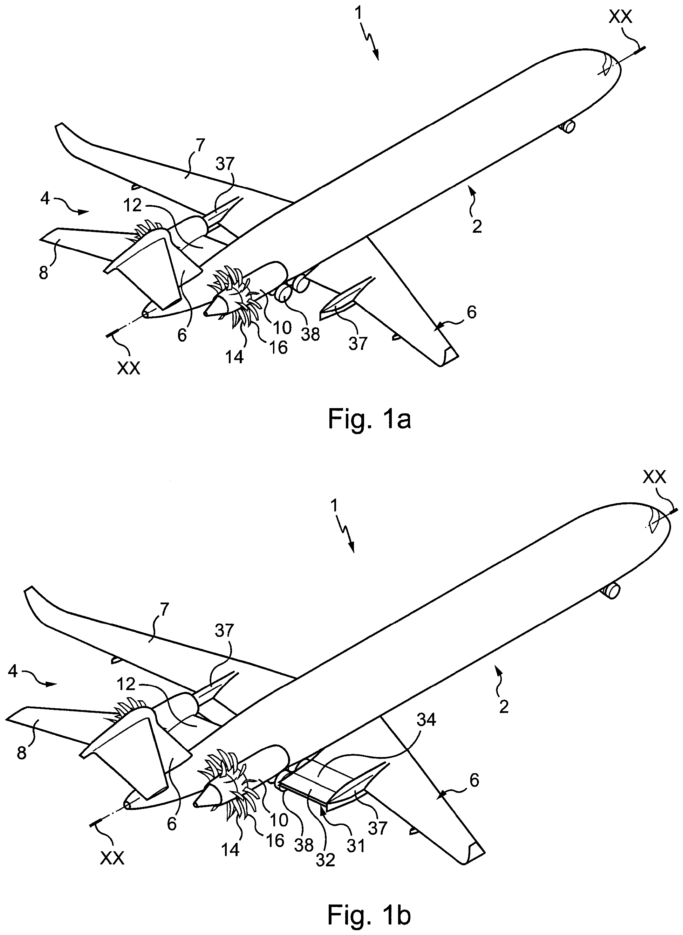

Les figures 1a et 1b illustrent un exemple d'aéronef à impact environnemental réduit conforme à l'invention.

L'aéronef 1 présente un axe longitudinal XX' et comporte un fuselage 2 allongé suivant cet axe et une voilure 4 composée de deux ailes symétriques 6 et 7 et d'un empennage horizontal arrière 8. Les ailes 6, 7 ne portent aucun moteur dans cet exemple de réalisation.

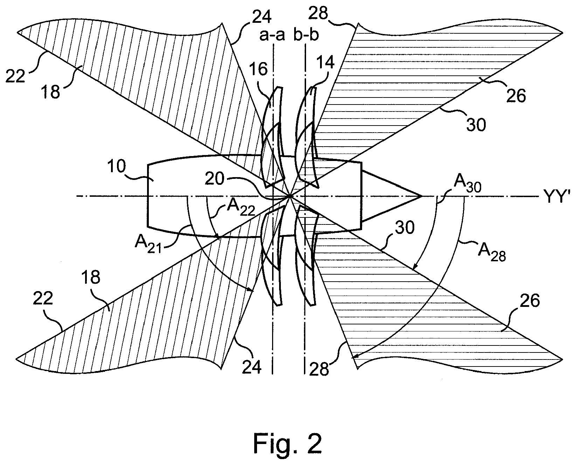

A l'arrière du fuselage 2 sont montés deux moteurs ou réacteurs, plus particulièrement des turbopropulseurs à hélices 10 disposés sur le dos dudit aéronef 1 avec leurs axes YY' (figure 2) parallèles à l'axe longitudinal XX'. Les turbopropulseurs 10 sont portés par des pylônes 12 et sont disposés côte à côte de façon symétrique, entre la voilure et l'empennage 8. Chaque turbopropulseur 10 comporte à l'arrière des hélices contrarotatives, par exemple deux hélices 14, 16 pousseuses non carénées. On notera que le dispositif s'appliquerait également, et ce avec encore plus d'efficacité, à des hélices de type tractrices positionnées à l'arrière du fuselage. Les deux hélices 14 et 16 sont disposées en regard l'une de l'autre et à une cote inférieure à celle de l'empennage horizontal 8.

En fonctionnement, les hélices 14 et 16 de chaque turbopropulseur engendrent un bruit d'interaction se diffusant dans plusieurs zones de bruit illustrées sur la figure 2 et définies comme suit :
- une première zone formée par un lobe conique 18 dirigé vers l'avant du turbopropulseur et centré sur l'axe YY' de celui-ci, le sommet 20 du lobe se trouvant sur ledit axe YY' au milieu des plans médians a-a et b-b des hélices 14 et 16 ; le lobe conique avant 18 est défini entre une surface conique externe 22 d'axe YY', de sommet 20 et d'angle A₂₂ au sommet compris entre 50° et 70° (en fonction du type particulier du turbopropulseur) et une surface conique interne 24 d'axe YY', de sommet 20 et d'angle au sommet A₂₄ compris entre 20° et 40° (en fonction du type particulier du turbopropulseur) et
- une deuxième zone formée par le lobe conique 26, dirigé vers l'arrière du turbopropulseur et centré sur l'axe YY' de celui-ci, le sommet de ce lobe 26 étant confondu avec le sommet 20 ; le lobe conique arrière 26 est défini entre une surface conique externe 28 d'axe YY', de sommet 20 et d'angle A₂₈ au sommet compris entre 40° et 60° (en fonction du type particulier du turbopropulseur) et une surface conique interne 30 d'axe YY', de sommet 20 et d'angle au sommet A₃₀ compris entre 10° et 30 (en fonction du type particulier du turbopropulseur).

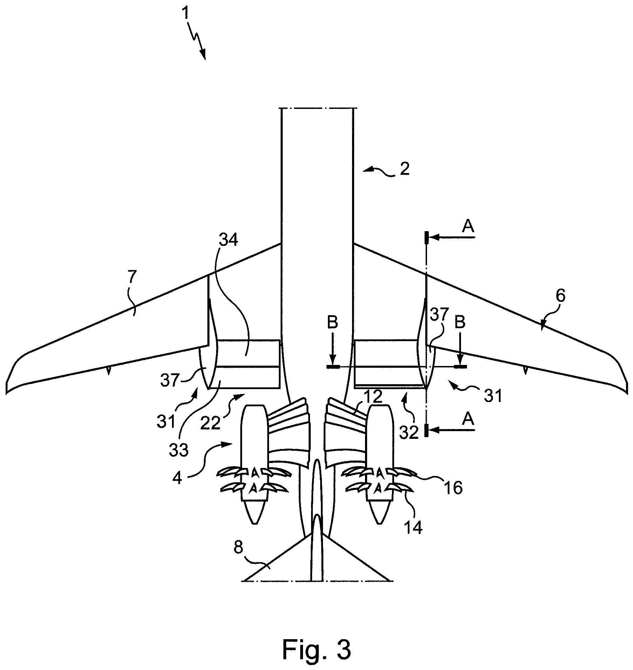

Comme on peut le voir sur les figures 1a et 1b, et plus particulièrement sur la figure 3, un dispositif de masquage acoustique 31 est associé à chacune des ailes 6, 7 et comporte de façon générale au moins un élément de masquage 32 qui est apte à se déplacer entre une position rétractée et une position déployée. A cet effet, des moyens de déplacement de l'élément de masquage sont prévus comme décrit plus loin.

Cet élément de masquage a pour but d'intercepter, dans sa position déployée, la zone de bruit dirigée vers l'avant telle que définie ci-dessus. Ainsi, la perception au sol du bruit diffusé par les turbopropulseurs est réduite.

Cet élément de masquage comprend ici au moins un volet et, par exemple, un volet principal 33 rigide et un volet secondaire souple composé par exemple d'une toile 34 tendue entre le bord d'attaque du volet mobile 33 et le longeron arrière, par exemple fixe, de la voilure.

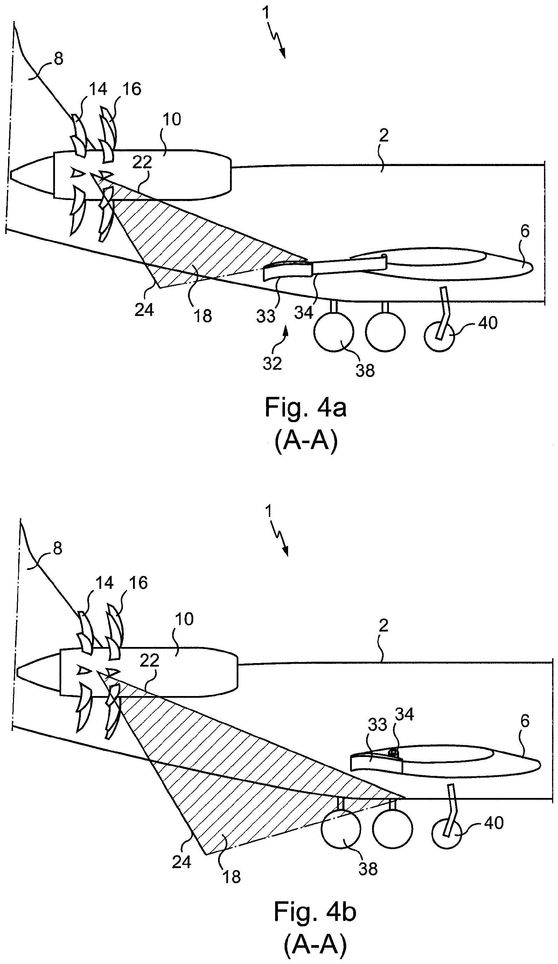

Comme on peut le voir sur les figures 4a et 4b, le volet principal 33 de l'élément de masquage 32 intercepte le lobe conique 18 de bruit avant lorsqu'il est déployé.

En outre, comme décrit précédemment en référence aux figures 1a et 1b, les turbopropulseurs 10 étant montés à l'arrière de l'aéronef entre les ailes 6,7 et l'empennage horizontal 8, le lobe conique 20 de bruit arrière est intercepté, quant à lui, par l'empennage horizontal 8.

La conjonction de la position de l'empennage horizontal 8 et de l'adjonction du dispositif de masquage acoustique 31 permet donc de réduire davantage la perception au sol du bruit provoqué par l'interaction des hélices. On notera toutefois que dans d'autres configurations l'empennage arrière peut être agencé différemment, et ainsi, ne pas interférer avec les lobes coniques 20 de bruit arrière des turbopropulseurs.

Le volet secondaire 34 constitue un moyen d'obturer l'espace libre pouvant exister entre le volet principal mobile (volet d'interception) et la voilure fixe pour des raisons d'ordre acoustique. En revanche, dans le cas d'un vol à basse vitesse, un système à fentes (obturation partielle) permet d'obtenir de meilleures performances aérodynamiques. Cet espace laissé libre est dû au fait que la taille du volet principal n'est pas suffisante lorsque ce dernier est reculé (position déployée) au maximum pour occuper tout l'espace existant entre son bord d'attaque et la voilure. L'adjonction d'un volet secondaire permet de reculer davantage le volet principal et d'augmenter d'autant la corde à l'emplanture de la voilure, en particulier lorsque la taille de ce dernier est fixée. Alternativement, l'espace libre peut être obturé par un ou plusieurs volets rigides.

Comme on le verra plus loin, lorsque l'élément de masquage est en position rétractée, le dispositif de masquage est logé dans un espace aménagé à cet effet à l'intérieur de l'aile de l'aéronef, ou simplement sous cette dernière, en contact avec son intrados. Dans ce dernier cas, il est nécessaire de prévoir un carénage ou des bossages recouvrant certains éléments du dispositif de masquage pour obtenir un profil intrados aussi lisse que possible et donc réduire l'impact de leur présence sur l'aérodynamique de l'aile, en particulier à haute vitesse

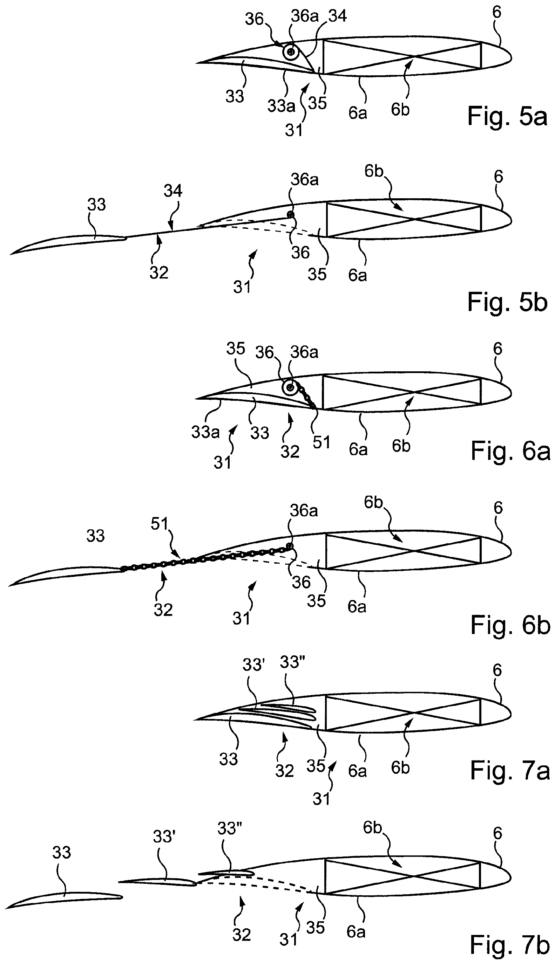

Dans un premier mode de réalisation de dispositif de masquage illustré sur les figures 5a-b, l'élément de masquage 32 comporte un volet principal 33 et un volet secondaire 34 fixé audit volet principal. Le volet 34 est constitué d'une toile souple qui peut être stockée en position enroulée comme illustré sur les figures 4b et 5a.

Ce stockage est effectué dans un espace 35 aménagé à cet effet dans l'aile de l'aéronef (dans la partie arrière incluant le bord de fuite), de façon à ce que le volet principal 33, lorsqu'il est en position rétractée, soit en position affleurante par rapport à la surface externe de l'aile (ici l'intrados). Plus particulièrement, la partie inférieure 33a du volet constitue elle-même une partie de l'intrados qui prolonge la partie amont fixe 6a de l'intrados. L'espace arrière 35 est conçu de manière à laisser suffisamment de place à l'intérieur de l'aile pour permettre l'agencement de réservoirs de carburant. Ainsi, la zone interne 6b de l'aile située en amont de l'espace 35 peut servir de logement à des réservoirs de carburant.

L'aéronef est pourvu en outre d'un système enrouleur/dérouleur 36 permettant d'enrouler et de dérouler la toile 34 selon les besoins de masquage. Ce système est illustré plus en détail sur les figures 5a-b et 6a-b.

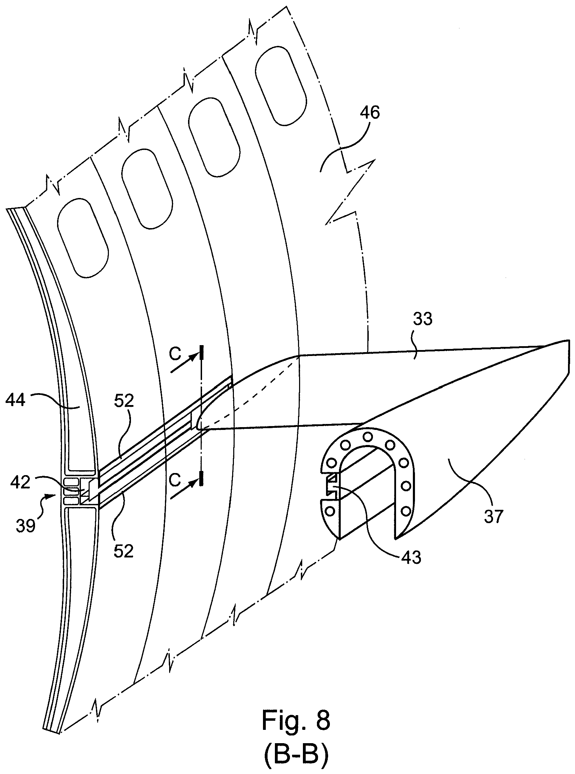

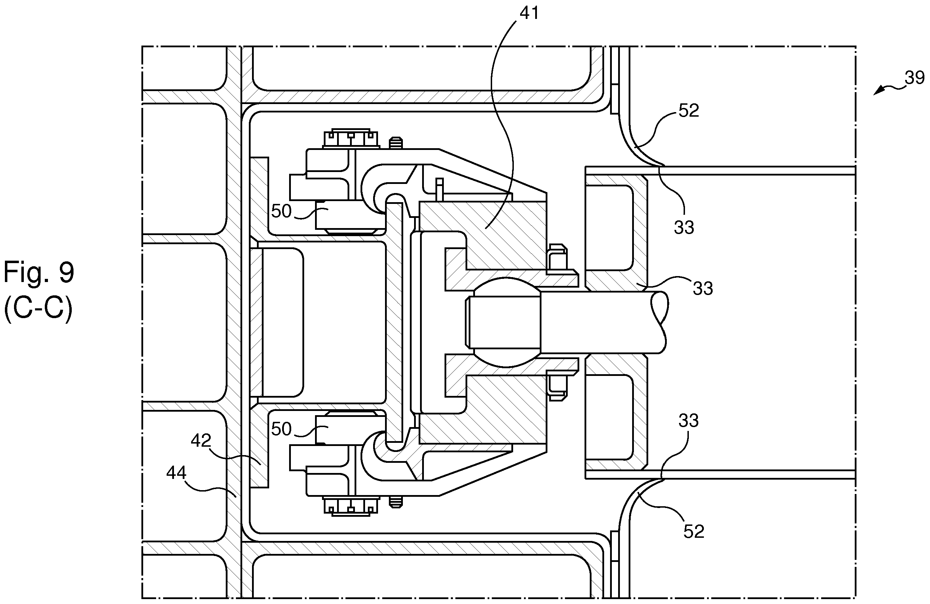

Le système enrouleur/dérouleur 36 est logé dans l'espace 35 et comporte un axe 36a autour duquel s'enroule la toile 34. L'axe 36a peut être entraîné en rotation par un mécanisme à ressort (non représenté). Alternativement, l'axe est asservi mécaniquement au déplacement du ou des chariots d'un système de chariot(s) et rail(s) pouvant composer les moyens de déplacement de l'élément de masquage 32. Un tel système est décrit plus loin et représenté sur les figures 8 et 9.

L'avantage d'un tel mode de réalisation réside dans sa grande légèreté par rapport à un volet secondaire qui serait composé d'un ou de plusieurs volets rigides et non d'une toile.

Dans un second mode de réalisation illustré sur les figures 6a-b, l'élément de masquage 32 comporte un volet principal 33 et un volet secondaire constitué d'une toile semi-rigide 51. La toile 51 est constituée de lamelles creuses articulées les unes par rapport aux autres de manière à pouvoir s'enrouler autour de l'axe à la façon d'un volet roulant d'habitation.

De même que dans le mode de réalisation décrit précédemment, la toile 51 est également stockée de façon enroulée dans un espace 35 prévu à cet effet dans l'aile 6, de même que le système enrouleur/dérouleur 36.

Ce second mode de réalisation confère une plus grande robustesse au dispositif de masquage du fait de la plus grande résistance d'une toile à lamelles par rapport à une toile de tissu.

Dans un troisième mode de réalisation, l'élément de masquage 32 comprend une pluralité de volets rigides (33, 33', 33"), par exemple au nombre de trois sur les figures 7a-b. Ces trois volets (33, 33', 33") sont par exemple homothétiques et aptes à coulisser les uns sur les autres.

Dans ce cas, par exemple, chaque volet se déploie et se rétracte à l'aide de systèmes de chariot(s) et rails(s) (non représentés sur cette figure) décrit plus loin et présenté à la figure 8.

En position rétractée, les volets (33, 33', 33") sont superposés à l'intérieur de l'aile (Fig. 7a) dans l'espace interne arrière 35. En position déployée, le bord aval du plus petit des volets 33" qui est le plus proche de l'aile 6, chevauche le bord amont du volet intermédiaire 33'. Le bord aval du volet intermédiaire 33' chevauche le bord amont du plus grand des volets 33 qui est le plus éloigné de l'aile.

Le chevauchement des volets permet de rendre la courbe des extrados réunis des volets plus lisse, rendant ainsi l'élément de masquage qu'ils composent plus aérodynamique dans son ensemble. (. En position déployée, les fentes entre les volets sont de préférence réduites afin de maximiser l'effet de masquage acoustique. Toutefois, un compromis peut être trouvé entre efficacité acoustique et bénéfice apporté par l'aérodynamisme des fentes.

Ce troisième mode de réalisation permet de ne pas avoir recours à un système enrouleur/dérouleur et occupe à peu près le même volume interne à l'espace 35 que les deux modes précédents avec le système enrouleur-dérouleur.

Ainsi, dans la position déployée, l'extension de l'élément de masquage 32 des trois modes précédents augmente de manière significative la corde à l'emplanture de chacune des ailes.

Le mode de réalisation illustré figures 7a et 7b est privilégié car il est plus robuste. Différents moyens de déplacement d'un élément de masquage sont illustrés plus en détail sur les figures 8, 9 et 10a-b.

Les figures 8 et 9 illustrent une première possibilité de réalisation de ces moyens de déplacement.

Ainsi, le dispositif de masquage acoustique 31 comporte un système 39 de chariots et de rails servant au guidage du déplacement du chariot lors du déplacement du ou des éléments de masquage, ici par exemple le volet 33. Dans les modes des figures 5a-b, 6a-b et 7a-b, le système de chariots et de rails guide le volet principal 33, le ou les éléments secondaires fixés à ce dernier étant entraînés par son mouvement.

Comme représenté sur la figure 8, et également sur les figures 1a-b, 3, 4a et 4b, l'aéronef 1 peut comporter des carénages 37 liés à la voilure 4. Il s'agit ici en l'occurrence de carénages dits « de Küchemann » situés sensiblement au milieu de chacune des ailes 6,7 de la voilure 4.

Le système de chariots et rails 39 comporte, d'une part, deux rails 42, 43 situés respectivement dans le fuselage 2 et le carénage 37 et, d'autre part, deux chariots agencés de façon coulissante par rapport à l'un des rails (seuls le chariot 41 du fuselage 2 et le rail 42 sont représentés sur la figure 8).

Plus précisément, le rail 42 du fuselage est situé dans une cavité aménagée dans le cadre 44 du fuselage 2, de manière à ne pas faire saillie par rapport à la surface extérieure du panneau 46 du fuselage pour des raisons aérodynamiques.

Les chariots ont pour rôle d'assurer la translation vers l'arrière (déploiement) et vers l'avant (rétractation) du volet principal 33 tout en assurant la reprise des efforts, principalement dus à la pression dynamique et à la portance, appliqués sur ce dernier.

Les chariots sont entraînés en translation par exemple à l'aide d'un montage vis-écrou ou par un mécanisme roue-vis commandé par une bielle de poussée. Ces deux solutions sont connues en soi dans le domaine des systèmes hypersustentateurs, étant présentes en particulier dans les avions de commerce de type A300B et A320.

Comme on peut le voir sur la section schématique de la figure 9, le système comporte une liaison rotule entre le volet principal 33 (représenté partiellement) et le chariot 41 afin de rendre la liaison mécanique la moins hyperstatique possible. La même liaison est utilisée entre le volet et le chariot associé au rail 43 (figure 8).

Afin d'assurer un déplacement sans jeu et sans frottement, les chariots, tels que le chariot 41 de la figure 9, comportent divers galets 50.

Des joints à lèvre 52 sont en contact respectivement avec l'extrados et l'intrados du volet principal 33 pour limiter la pénétration d'eau et d'air dans chacune des cavités recevant l'un des chariots et l'un des rails 42,43.

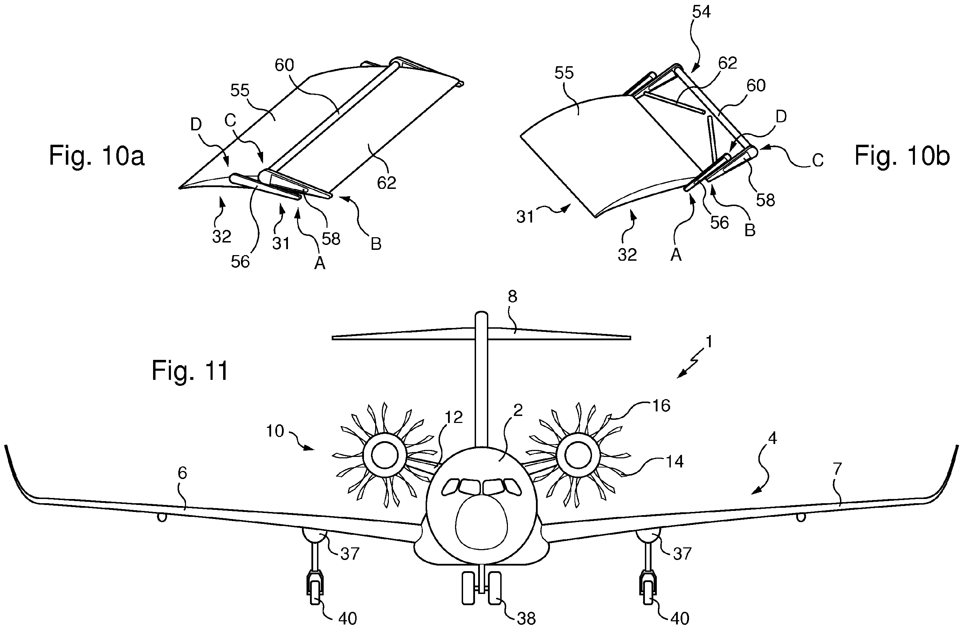

Selon une deuxième possibilité de réalisation illustrée sur les figures 10a-b, les moyens de déplacement de l'élément de masquage 32 du dispositif de masquage acoustique 31 comprennent un parallélogramme déformable 54. Dans ces figures, l'élément de masquage 32 est constitué d'un seul volet 55.

Ce parallélogramme déformable 54 est constitué de deux bielles de guidage 56 et de deux barres de mise en mouvement 58.

Les bielles de guidages 56, identiques, présentent une forme allongée de faible épaisseur, et de largeur légèrement croissante d'une extrémité à l'autre de la bielle.

Une extrémité A des bielles de guidage 56 est fixée par sa face interne à l'élément de masquage 32 à proximité de son extrémité amont mais à distance de celle-ci. L'extrémité opposée D des bielles de guidage 56 est laissée libre.

Chaque bielle de guidage reste en contact ponctuel permanent avec la barre de mise en mouvement 58 sur laquelle elle est apte à glisser.

Les barres de mouvement 58 sont de forme générale similaire à celle des bielles de guidage 56.

Une de leurs extrémités B est fixée à l'extrémité amont de l'élément de masquage 32 par sa face interne et leur extrémité opposé C est fixée à un arbre de torsion 60 orienté perpendiculairement à leur axe longitudinal, par exemple par encastrement.

L'arbre de torsion 60 se présente sous la forme d'un tube. Sa mise en mouvement autour de l'axe y représenté sur les figures 10a et 10b est assurée soit par un vérin télescopique (non représenté) logé entre le volet et le longeron arrière de la voilure soit par un vérin rotatif (non représenté) logé dans le fuselage.

Des barres de reprise d'efforts 62 assurent la reprise des efforts perpendiculaires au plan des bielles de guidage 56, permettant ainsi de limiter l'inertie des bielles.

Le dispositif de masquage acoustique est positionné sous l'aile, l'arbre de torsion 60 étant relié aux longerons par des nervures fortes et à l'aide de supports (non représentés).

Alternativement, dans une première variante de réalisation non représentée, la masse des bielles de guidage 56 est augmentée afin de supprimer les barres de reprise d'efforts 62.

Dans une deuxième variante de réalisation non représentée, l'élément de masquage 32 comprend deux volets et un support supplémentaire à mi-distance des supports reliant le premier volet à l'aile est ajouté.

Dans une troisième variante de réalisation non représentée, l'arbre de torsion 60 n'est plus utilisé pour la mise en mouvement mais uniquement pour la synchronisation du mouvement des barres de mise en mouvement et des bielles de guidage. Des vérins sont alors ajoutés au droit de chaque support.

Le mécanisme composé d'un parallélogramme déformable possède l'avantage d'être en très grande partie logé dans l'épaisseur de la voilure 4. Seuls deux petits bossages du revêtement intrados sont nécessaires pour couvrir les extrémités A et B qui dépassent légèrement du profil. Ceci permet d'éviter d'ajouter un rail de volet et un carénage associé au niveau de l'intrados voilure.

Cette deuxième possibilité de réalisation est particulièrement adaptée aux voilures présentant un volume interne appelé « Yehudi » (volume interne localisé en interne de la cassure du bord de fuite, c'est-à-dire entre la cassure du bord de fuite et le fuselage) important. En outre, les composants de cette deuxième possibilité présentent l'avantage d'être simples et sa masse ainsi que les pénalités aérodynamiques induites sont faibles.

Dans une configuration générale, les ailes d'un aéronef tel que celui des figures 1a-b ne portent aucun moteur et n'ont pas été reculées (la position reculée des ailes s'entend par une position des ailes plus éloignée du nez de l'avion par rapport à leur position sur un aéronef standard, en particulier un avion commercial dont les ailes sont situées dans une position qui est à une distance du nez de l'avion comprise entre 50% et 55% de la longueur du fuselage ; la position reculée s'entend donc ici par des ailes situées au-delà des 55% de la longueur du fuselage) ou, en tous cas, peu reculées, grâce à l'adjonction du système de masquage acoustique selon l'invention. Cette configuration générale permet de mettre en oeuvre les caractéristiques aérodynamiques suivantes :
- réduction de la flèche, ce qui augmente la portance maximale de l'aéronef, et donc les performances à basse vitesse ; et
- augmentation l'allongement des ailes (qui est le rapport de l'envergure d'une aile au carré de la surface de cette aile), ce qui leur procure une grande finesse.

Ainsi, l'aéronef présente d'excellentes performances au décollage et à l'atterrissage, notamment la faculté de s'élever plus vite dans les airs et d'atterrir plus lentement. Ceci contribue à réduire encore davantage le bruit engendré au décollage et à l'atterrissage.

En outre, cette configuration optimisée permet d'améliorer les performances de l'aéronef de façon significative en termes de consommation de carburant et de réduction de la traînée. En effet, l'allongement réduit la traînée induite et la réduction de la flèche permet d'envisager une voilure partiellement laminaire. Dans le cas d'une telle configuration, un système de volet à moyen de déplacement du type chariot(s) et rail(s) est privilégié, de même que l'utilisation de carénages dits de Küchemann.

De préférence, la flèche est au plus égale à 22° et l'allongement est au moins égal à 10. De préférence, l'allongement est compris entre 10 et 14 et la flèche est comprise entre 17° et 22° (une flèche trop faible nécessiterait de réduire la vitesse de croisière).

L'aéronef 1 présente également, comme on peut le voir sur la figure 11, deux carénages 37, un train d'atterrissage central 38 et deux trains d'atterrissage auxiliaires 40 de type balanciers.

Alternativement, les trains d'atterrissages sont logés dans les carénages 37.

Les trains d'atterrissage auxiliaires de type balanciers sont connus de l'homme du métier par exemple sous l'appellation B-47, B-52, U-2 ou peuvent être différents de ceux-ci.

L'avantage de la configuration présentée sur la figure 11 est que la voilure 4 n'a pas à supporter le train d'atterrissage central, ce qui a pour conséquence de réduire les charges y étant introduites, et de permettre de minimiser la taille des carénages 37.

De cette façon, il est possible de réduire encore davantage la flèche et d'augmenter encore davantage l'allongement des ailes pour augmenter les performances, car la voilure n'a pas à être suffisamment volumineuse pour pouvoir y intégrer un train d'atterrissage présentant une voie suffisante pour assurer la stabilité au sol.

Il convient cependant de rappeler que la présente invention n'exclut pas un cas où la voilure devrait être reculée de manière à nécessiter l'adjonction d'une surface portante dite canard à l'avant du fuselage.

Le dispositif de masquage acoustique contribue grandement à la réduction du bruit perçu au sol et constitue une alternative à un recul de la voilure ou à une augmentation de la corde. Selon une configuration particulière, un élément de masquage d'une longueur de 1,5 m (le maximum étant de l'ordre de 2,2m) a le même effet qu'une augmentation conjointe de la corde de l'empennage et de la voilure de 20%.

Bien que les figures n'aient présenté que l'exemple d'un aéronef à turbopropulseur à hélices, le présent concept peut être appliqué aux aéronefs équipés d'autres types de moteurs tels que des turbofans positionnés sur le fuselage en arrière de la voilure.

Ces aéronefs sont typiquement des avions de type SFN (« Side Fuselage Nacelle » en terminologie anglo-saxonne) dont les deux moteurs sont situés en arrière du fuselage de part et d'autre de ce dernier, ou RFN.

Etant donnée la position des moteurs par rapport à l'axe de l'avion dans de tels cas, la zone de bruit amont engendrée par la soufflante se situe au niveau de l'emplanture de l'aile. Cette dernière peut donc être interceptée par un dispositif de masquage acoustique conforme à l'invention.

## Revendications

1. Aéronef à impact environnemental réduit, comportant au moins un fuselage (2) pourvu d'une voilure (4) comprenant deux ailes symétriques (6,7) et au moins un moteur (10), ledit au moins un moteur (10) étant monté sur le dos de l'aéronef, à l'arrière de l'aéronef entre lesdites ailes (6, 7) et l'extrémité arrière de l'aéronef de sorte que la voilure n'est pas placée directement en dessous du moteur et ledit au moins un moteur (10) générant du bruit vers l'avant, le bruit généré par ledit au moins un moteur se diffusant dans une zone de bruit (18), ledit aéronef comportant au moins un dispositif de masquage acoustique (31) comprenant au moins un élément de masquage (32) associé à la voilure qui est apte à se déplacer entre, d'une part, une position rétractée et, d'autre part, une position déployée dans laquelle ledit au moins un élément de masquage intercepte la zone de bruit (18) de manière à réduire la perception au sol du bruit diffusé vers l'avant par ledit au moins un moteur (10), l'élément de masquage acoustique (32) étant reculé dans sa position déployée de manière à augmenter la corde à l'emplanture de la voilure (4),
**caractérisé en ce que** ledit au moins un élément de masquage (32) comprend un volet principal (33) et au moins un volet secondaire (33', 33", 34), le volet secondaire étant agencé de manière à obturer, dans sa position déployée, l'espace libre entre le volet principal mobile et la voilure fixe pour améliorer le masquage acoustique.

2. Aéronef selon la revendication 1, **caractérisé en ce que** l'élément de masquage (32) est en position rétractée en phase de croisière et en position déployée en phase de décollage, d'atterrissage et/ou d'approche.

3. Aéronef selon l'une des revendications 1 à 2, **caractérisé en ce que** la voilure (4) comprend au moins un empennage horizontal arrière (8), ledit au moins un moteur (10) étant monté à l'arrière de l'aéronef entre lesdites ailes (6,7) et ledit empennage horizontal (8), un dispositif de masquage acoustique (31) étant associé à chacune des ailes (6,7), ledit au moins un élément de masquage (32) de chaque dispositif (31) étant apte à se déplacer entre une position rétractée et une position déployée de manière à augmenter la corde à l'emplanture de chacune des ailes (6,7).

4. Aéronef selon l'une des revendications 1 à 3, **caractérisé en ce que** ledit au moins un dispositif (31) comprend des moyens de déplacement dudit au moins un élément de masquage (32).

5. Aéronef selon l'une des revendications précédentes, **caractérisé en ce que** le volet principal (33) est rigide et ledit au moins volet secondaire est fait d'une toile souple (34).

6. Aéronef selon la revendication 5, **caractérisé en ce que** ledit au moins un dispositif de masquage acoustique (31) comprend un système enrouleur/dérouleur (36) permettant d'enrouler et de dérouler la toile souple (34).

7. Aéronef selon l'une des revendications 1 à 6, **caractérisé en ce que** ledit au moins un dispositif de masquage acoustique (31) comporte un système de chariot(s) et de rail(s) (39) servant au guidage du déplacement du chariot (41) lors du déplacement dudit au moins un élément de masquage (32).

8. Aéronef selon la revendication 7, **caractérisé en ce qu'**il comporte en outre au moins un carénage (37) lié à la voilure (4), le système de chariot(s) et de rail(s) (39) comportant deux rails (42, 43) logés respectivement dans le fuselage (2) et dans ledit au moins un carénage (37).

9. Aéronef selon la revendication 7 ou 8, **caractérisé en ce qu'**il comporte en outre deux carénages (37) liés à la voilure (4), un train d'atterrissage central (38) et deux trains d'atterrissage auxiliaires (40) de type balanciers respectivement logés dans les deux carénages (37).

10. Aéronef selon la revendication 8 ou 9, **caractérisé en ce que** le ou les carénages (37) sont des carénages dits « de Küchemann » situés sensiblement au milieu de chacune des ailes (6,7) de la voilure (4).

11. Aéronef selon la revendication 4, **caractérisé en ce que** les moyens de déplacement dudit au moins un élément de masquage (32) comprennent un parallélogramme déformable (54).

12. Aéronef selon la revendication 11, **caractérisé en ce que** le parallélogramme déformable (54) comprend au moins un arbre de torsion (60), au moins une bielle de guidage (56) et au moins une barre de mise en mouvement (58), la mise en mouvement dudit parallélogramme (54) étant assurée par la rotation dudit arbre de torsion (60).

13. Aéronef selon l'une des revendications 1 à 12, **caractérisé en ce que** lesdites ailes (6,7) présentent une faible flèche et un grand allongement de manière à réduire la consommation de carburant.

14. Aéronef selon l'une des revendications 1 à 13, **caractérisé en ce qu'**il comporte, à l'avant du fuselage (2), une surface portante dite canard.

## Patentansprüche

1. Luftfahrzeug mit verringerten Umweltauswirkungen, welches wenigstens einen Rumpf (2), der mit einem Tragwerk (4) versehen ist, das zwei symmetrische Flügel (6, 7) umfasst, und wenigstens einen Motor (10) aufweist, wobei der wenigstens eine Motor (10) auf dem Rücken des Luftfahrzeugs angebracht ist, hinten am Luftfahrzeug zwischen den Flügeln (6, 7) und dem hinteren Ende des Luftfahrzeugs, derart, dass das Tragwerk nicht direkt unterhalb des Motors angeordnet ist, und wobei der wenigstens eine Motor (10) nach vorn abgestrahlten Lärm erzeugt, wobei der von dem wenigstens einen Motor erzeugte Lärm sich in einem Lärmbereich (18) ausbreitet, wobei das Luftfahrzeug wenigstens eine Vorrichtung zur akustischen Maskierung (31) aufweist, die wenigstens ein dem Tragwerk zugeordnetes Maskierungselement (32) umfasst, welches in der Lage ist, sich zwischen einerseits einer zurückgezogenen Position und andererseits einer entfalteten Position, in welcher das wenigstens eine Maskierungselement den Lärmbereich (18) abschneidet, um die Wahrnehmung des von dem wenigstens einen Motor (10) nach vorn abgestrahlten Lärms am Boden zu verringern, zu bewegen, wobei das Element zur akustischen Maskierung (32) in seiner entfalteten Position zurückgesetzt ist, um die Profilsehne an der Wurzel des Tragwerk (4) zu vergrößern,
**dadurch gekennzeichnet, dass** das wenigstens eine Maskierungselement (32) eine Hauptklappe (33) und wenigstens eine Nebenklappe (33', 33", 34) umfasst, wobei die Nebenklappe derart angebracht ist, dass sie in ihrer entfalteten Position den freien Raum zwischen der beweglichen Hauptklappe und dem festen Tragwerk verschließt, um die akustische Maskierung zu verbessern.

2. Luftfahrzeug nach Anspruch 1, **dadurch gekennzeichnet, dass** sich das Maskierungselement (32) während der Reiseflugphase in der zurückgezogenen Position und während der Start-, der Lande- und/oder der Anflugphase in der entfalteten Position befindet.

3. Luftfahrzeug nach einem der Ansprüche 1 bis 2, **dadurch gekennzeichnet, dass** das Tragwerk (4) wenigstens ein hinteres Höhenleitwerk (8) umfasst, wobei der wenigstens eine Motor (10) hinten am Luftfahrzeug zwischen den Flügeln (6, 7) und dem Höhenleitwerk (8) angebracht ist, wobei jedem der Flügel (6, 7) eine Vorrichtung zur akustischen Maskierung (31) zugeordnet ist, wobei das wenigstens eine Maskierungselement (32) jeder Vorrichtung (31) in der Lage ist, sich zwischen einer zurückgezogenen Position und einer entfalteten Position zu bewegen, um die Profilsehne an der Wurzel jedes der Flügel (6, 7) zu vergrößern.

4. Luftfahrzeug nach einem der Ansprüche 1 bis 3, **dadurch gekennzeichnet, dass** die wenigstens eine Vorrichtung (31) Mittel zur Bewegung des wenigstens einen Maskierungselements (32) umfasst.

5. Luftfahrzeug nach einem der vorhergehenden Ansprüche, **dadurch gekennzeichnet, dass** die Hauptklappe (33) starr ist und die wenigstens eine Nebenklappe aus einem flexiblen Gewebe (34) hergestellt ist.

6. Luftfahrzeug nach Anspruch 5, **dadurch gekennzeichnet, dass** die wenigstens eine Vorrichtung zur akustischen Maskierung (31) ein Auf- und Abwickelsystem (36) umfasst, welches ermöglicht, das flexible Gewebe (34) aufzurollen und abzurollen.

7. Luftfahrzeug nach einem der Ansprüche 1 bis 6, **dadurch gekennzeichnet, dass** die wenigstens eine Vorrichtung zur akustischen Maskierung (31) ein System von einem oder mehreren Schlitten und von einer oder mehreren Schienen (39), die zur Führung der Bewegung des Schlittens (41) bei der Bewegung des wenigstens einen Maskierungselements (32) dienen, aufweist.

8. Luftfahrzeug nach Anspruch 7, **dadurch gekennzeichnet, dass** es außerdem wenigstens eine mit dem Tragwerk (4) verbundene Verkleidung (37) aufweist, wobei das System von einem oder mehreren Schlitten und einer oder mehreren Schienen (39) zwei Schienen (42, 43) aufweist, die im Rumpf (2) bzw. in der wenigstens einen Verkleidung (37) aufgenommen sind.

9. Luftfahrzeug nach Anspruch 7 oder 8, **dadurch gekennzeichnet, dass** es außerdem zwei mit dem Tragwerk (4) verbundene Verkleidungen (37), ein zentrales Fahrwerk (38) und zwei Hilfsfahrwerke (40) vom Balancer-Typ, die jeweils in einer der zwei Verkleidungen (37) aufgenommen sind, aufweist.

10. Luftfahrzeug nach Anspruch 8 oder 9, **dadurch gekennzeichnet, dass** die Verkleidung oder die Verkleidungen (37) sogenannte "Küchemann-Karotten" sind, die sich im Wesentlichen in der Mitte jedes der Flügel (6, 7) des Tragwerks (4) befinden.

11. Luftfahrzeug nach Anspruch 4, **dadurch gekennzeichnet, dass** die Mittel zur Bewegung des wenigstens einen Maskierungselements (32) ein verformbares Parallelogramm (54) umfassen.

12. Luftfahrzeug nach Anspruch 11, **dadurch gekennzeichnet, dass** das verformbare Parallelogramm (54) wenigstens eine Torsionswelle (60), wenigstens eine Führungsstange (56) und wenigstens eine Bewegungsstange (58) umfasst, wobei die Bewegung des Parallelogramms (54) durch die Drehung der Torsionswelle (60) sichergestellt wird.

13. Luftfahrzeug nach einem der Ansprüche 1 bis 12, **dadurch gekennzeichnet, dass** die Flügel (6, 7) eine geringe Pfeilung und eine hohe Streckung aufweisen, um den Treibstoffverbrauch zu verringern.

14. Luftfahrzeug nach einem der Ansprüche 1 bis 13, **dadurch gekennzeichnet, dass** es vorn am Rumpf (2) eine sogenannte Canard-Tragfläche aufweist.

## Claims

1. Aircraft with reduced environmental impact, comprising at least a fuselage (2) provided with an airfoil (4) comprising two symmetrical wings (6, 7) and at least one engine (10), said at least one engine (10) being mounted on the back of the aircraft, at the rear of the aircraft between said wings (6, 7) and the rear end of the aircraft such that the airfoil is not placed directly under the engine and said at least one engine (10) generating noise forwards, the noise generated by said at least one engine being diffused in a noise zone (18), said aircraft comprising at least one acoustic masking device (31) comprising at least one masking element (32) associated with the airfoil which is capable of being displaced between, on the one hand, a retracted position and, on the other hand, a deployed position in which said at least one masking element intercepts the noise zone (18) so as to reduce the perception on the ground of the noise diffused forwards by said at least one engine (10), the acoustic masking element (32) being set back in its deployed position so as to increase the cord at the root of the airfoil (4), **characterised in that** said at least one masking element (32) comprises a main flap (33) and at least one secondary flap (33', 33", 34), the secondary flap being arranged so as to block, in its deployed position, the free space between the mobile main flap and the fixed airfoil to improve the acoustic masking.

2. Aircraft according to Claim 1, **characterised in that** the masking element (32) is in retracted position in cruising phase and in deployed position in take-off, landing and/or approach phase.

3. Aircraft according to one of Claims 1 and 2, **characterised in that** the airfoil (4) comprises at least one rear horizontal tail unit (8), said at least one engine (10) being mounted at the rear of the aircraft between said wings (6, 7) and said horizontal tail unit (8), an acoustic masking device (31) being associated with each of the wings (6, 7), said at least one masking element (32) of each device (31) being able to be displaced between a retracted position and a deployed position so as to increase the chord at the root of each of the wings (6, 7).

4. Aircraft according to one of Claims 1 to 3, **characterised in that** said at least one device (31) comprises means for displacing said at least one masking element (32).

5. Aircraft according to one of the preceding claims, **characterised in that** the main flap (33) is rigid and said at least one secondary flap is made of a flexible fabric (34).

6. Aircraft according to Claim 5, **characterised in that** said at least one acoustic masking device (31) comprises a winding/unwinding system (36) making it possible to wind in and unwind the flexible fabric (34) .

7. Aircraft according to one of Claims 1 to 6, **characterised in that** said at least one acoustic masking device (31) comprises a carriage(s) and rail(s) system (39) serving to guide the displacement of the carriage (41) in the displacement of said at least one masking element (32).

8. Aircraft according to Claim 7, **characterised in that** it also comprises at least one fairing (37) linked to the airfoil (4), the carriage(s) and rail(s) system (39) comprising two rails (42, 43) housed respectively in the fuselage (2) and in said at least one fairing (37) .

9. Aircraft according to Claim 7 or 8, **characterised in that** it also comprises two fairings (37) linked to the airfoil (4), a central landing gear (38) and two auxiliary landing gears (40) of stabiliser type respectively housed in the two fairings (37).

10. Aircraft according to Claim 8 or 9, **characterised in that** the fairing or fairings (37) are so-called "Küchemann" fairings situated substantially at the centre of each of the wings (6, 7) of the airfoil (4).

11. Aircraft according to Claim 4, **characterised in that** the means for displacing said at least one masking element (32) comprise a deformable parallelogram (54).

12. Aircraft according to Claim 11, **characterised in that** the deformable parallelogram (54) comprises at least one torque shaft (60), at least one guiding link (56) and at least one actuating bar (58), the actuating of said parallelogram (54) being ensured by the rotation of said torque shaft (60).

13. Aircraft according to one of Claims 1 to 12, **characterised in that** said wings (6, 7) have a low sweep and great extension so as to reduce the fuel consumption.

14. Aircraft according to one of Claims 1 to 13, **characterised in that** it comprises, at the front of the fuselage (2), a supporting surface called duck.
